Europäisches Patentamt

European Patent Office

Office européen des brevets

(11) Numéro de publication: **0 266 247 B1**

(12) **FASCICULE DE BREVET EUROPEEN**

(45) Date de publication de fascicule du brevet: 19.06.91

(51) Int. Cl.5: **C09C 1/00, C09C 3/08, C09C 1/30, C09C 1/36**

(21) Numéro de dépôt: 87402226.2

(22) Date de dépôt: 07.10.87

(54) **Pigments colorés, notamment pigments magnétiques, leurs procédés de préparation et leurs applications, notamment à la préparation de poudres de développement.**

(30) Priorité: 10.10.86 FR 8614102

(43) Date de publication de la demande: 04.05.88 Bulletin 88/18

(45) Mention de la délivrance du brevet: 19.06.91 Bulletin 91/25

(84) Etats contractants désignés: AT BE CH DE ES FR GB GR IT LI LU NL SE

(56) Documents cités:
EP-A- 0 123 577
EP-A- 0 256 417
FR-A- 2 275 536
GB-A- 2 114 991

CHEMICAL ABSTRACTS, vol. 99, no. 10, septembre 1983, page 76, résumé no. 72264f, Columbus, Ohio, US; & JP-A-58 21 455 (Y. KUBO) 08-02-1983

CHEMICAL ABSTRACTS, vol. 93, no. 2, juillet 1980, page 83, résumé no. 9623h, Columbus, Ohio, US; & JP-A-80 13 714 (K. HOSOYA) 30-01-1980

(73) Titulaire: **RHONE-POULENC CHIMIE**
**25, quai Paul Doumer**
**F-92408 Courbevoie Cédex(FR)**

(72) Inventeur: **Persello, Jacques**
**RN 83**
**F-01390 Saint André de Corcy(FR)**
Inventeur: **Ceintrey, Claude Les Hauts de falaises**
**Immeuble A Avenue des Canadiens**
**F-76370 Neuville les Dieppe(FR)**
Inventeur: **Sutter, Michel**
**Immeuble Verrazane APP. C - No 54 - 9ème**
**F-76370 Neuville les Dieppe(FR)**

(74) Mandataire: **Dubruc, Philippe et al**
**RHONE-POULENC INTERSERVICES Service**
**Brevets Chimie 25, quai Paul-Doumer**
**F-92408 Courbevoie Cédex(FR)**

CHEMICAL ABSTRACTS, vol. 100, no. 2, janvier 1984, page 101, résumé no. 8582v, Columbus, Ohio, US; & JP-A-58 38 764 (PENTEL CO. LTD) 07-03-1983

CHEMICAL ABSTRACTS, vol. 96, no. 2, janvier 1982, page 89, résumé no. 8210w, Columbus, Ohio, US; & JP-A-81 106 964 (Y. KUBO) 25-08-1981

CHEMICAL ABSTRACTS, vol. 99, no. 16, octobre 1983, page 86, résumé no. 124156u, Columbus, Ohio, US; & JP-A-58 32 660 (PENTEL CO. LTD) 25-02-1983

EP 0 266 247 B1

## Description

La présente invention concerne des pigments colorés, notamment des pigments magnétiques, leurs procédés de préparations ainsi que leurs applications, notamment à la préparation de poudres de développement.

On sait qu'on utilise dans de nombreuses applications des charges minérales pour conférer à un matériau un ensemble de propriétés déterminées. Parmi les plus classiques de ces propriétés, on peut citer les propriétés optiques, mécaniques, rhéologiques. En particulier, dans la préparation des poudres de développement, les pigments magnétiques constituent un élément de base.

Dans certaines applications, il est nécessaire d'employer ces charges en combinaison avec un pigment ou un colorant. Généralement, ces compositions charges-pigments sont obtenues par mélange physique de la charge minérale avec le colorant.

Toutefois, un tel procédé de préparation présente un certain nombre d'inconvénients.

Un premier inconvénient réside dans le fait qu'il est difficile, pour une charge minérale donnée, d'obtenir toutes les couleurs souhaitées. Cet inconvénient est particulièrement sensible dans le cas de la préparation de pigments magnétiques pour poudres de développement.

En effet, les particules magnétiques utilisées sont à base de fer ou de ferrites qui ont des couleurs très sombres, qu'il est impossible de masquer totalement par les colorants. Il se révèle ainsi impossible d'obtenir des poudres de développement ayant une couleur franchement brillante.

Un autre inconvénient se situe au niveau de la compatibilité du colorant avec le matériau qui va recevoir le pigment. En conséquence, pour un matériau donné, en fonction de cette compatibilité, il ne sera possible que d'utiliser un nombre limite de colorants. Dans le même ordre d'idée, il faudra aussi tenir compte de la dispersibilité du colorant dans ce même matériau.

Par ailleurs, les compositions colorées ainsi obtenues peuvent présenter une résistance faible au niveau de la dégradation photo-chimique et chimique ainsi que vis à vis de l'abrasion.

On connaît par le document CA 72264 f (Chem. Abstracts, Vol. 99 n° 10,p. 76, sept. 1983) des pigments colorés obtenus par précipitation sur des paillettes de mica d'une part d'un hydroxyde de calcium et d'autre part d'un oxyde de molybdène. On y indique que cette couche de revêtement contient un pigment organique insoluble. Le ratio en poids pigment/ mica dans le milieu réactionnel de départ est particulièrement élevé,puisque de l'ordre de 30 %.

L'objet principal de l'invention est de procurer des pigments qui, pour une particule minérale donnée, peuvent présenter toute la gamme souhaitable de couleurs, qui soient compatibles avec un grand nombre de matériaux et qui présentent enfin une résistance mécanique et chimique améliorée.

Dans ce but, les pigments colorés selon l'invention sont caractérisés en ce qu'ils comprennent :
- un support minéral,
- une couche de silice déposée à la surface dudit support et enrobant ledit support,
- au moins un colorant, ledit colorant étant inclus dans ladite couche de silice,et le pourcentage en poids dudit colorant par rapport audit support étant au plus égal à 10 %.

Selon une première variante de l'invention, le support minéral est à base d'un élément choisi dans le groupe comprenant les oxydes ou hydroxydes minéraux utilisables comme charge, les silicates, les carbonates minéraux, les sulfates, les sulfures et les fluorures.

Selon une deuxième variante de l'invention, les pigments sont des pigments magnétiques dans lesquels le support minéral précité est à base d'un élément choisi dans le groupe comprenant les métaux magnétiques, leurs oxydes et les complexes.

Par ailleurs, le procédé de préparation des pigments selon l'invention est caractérisé en ce qu'il comporte les étapes suivantes :
- on met en présence le support, au moins un colorant et un précurseur de la silice du type silicate ou alky-silicate,
- on précipite ou cristallise la silice par ajout d'un acide ou bien par hydrolyse,
- on sépare le pigment formé et la phase liquide du milieu réactionnel.

Enfin, l'invention concerne aussi une poudre de développement caractérisée en ce qu'elle comprend un pigment magnétique du type précité ou un pigment magnétique préparé par le procédé défini plus haut.

D'autres caractéristiques et avantages de l'invention seront mieux compris à la lecture de la description qui va suivre et des dessins annexés dans lesquels :
- la figure 1 est un graphe où est reportée la mesure de points de couleurs de poudres de développement à base de pigments rouges selon l'invention et d'une poudre selon l'art antérieur,

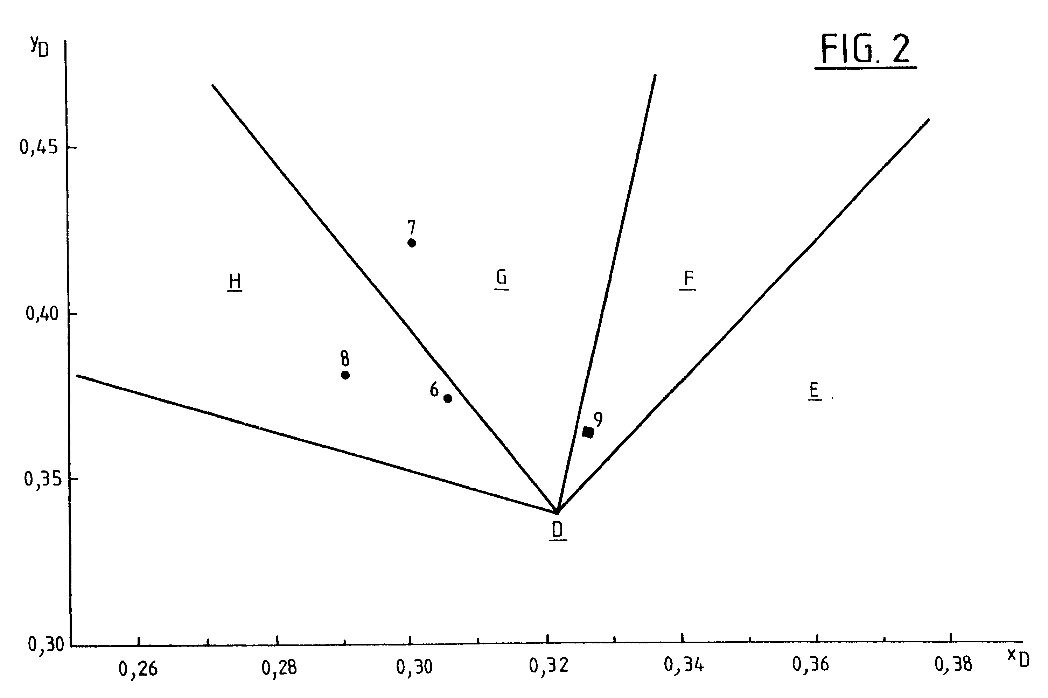

- la figure 2 est un graphe où est reportée la mesure de points de couleurs de poudres de développement à base de pigments verts selon l'invention et d'une poudre selon l'art antérieur.

3

Etant entendu que l'invention peut être mise en oeuvre en utilisant un ou plusieurs colorants, on notera que pour toute la suite de la description, ce qui est mentionné en faisant référence à un seul colorant doit s'entendre comme valable également pour plusieurs colorants.

La caractéristique essentiellement nouvelle des pigments colorés de l'invention réside dans leur structure.

Cette structure peut être décrite schématiquement de la manière suivante.

Le pigment de l'invention comporte un support ou particule minéral qui forme un noyau et, enrobant ce noyau, une couche périphérique d'oxyde dans laquelle se trouve présent ou inclus le colorant.

Grâce à cette caractéristique structurelle, les pigments de l'invention présentent des avantages certains.

Tout d'abord, les colorants peuvent masquer totalement la couleur du support minéral de sorte qu'il est ainsi possible d'obtenir des pigments dans toute la gamme de coloration possible.

En outre, comme les colorants peuvent être en partie inclus dans la masse d'oxyde déposé, le problème des compatibilités colorants-matériaux à traiter est ainsi résolu.

Enfin, pour la même raison que précédemment le colorant étant protégé par une couche d'oxyde, le pigment sera plus résistant notamment face à l'action chimique des solvants lors des lavages.

Leur résistance à l'abrasion permettra aux pigments de l'invention de résister aux forces de cisaillement qui se créent lors de leur mise en oeuvre par exemple lors des malaxages, extrusions ou agitations.

Les différents éléments constitutifs du pigment de l'invention vont maintenant être décrits plus précisément.

En ce qui concerne le support minéral des pigments de l'invention, ou peut utiliser tout matériau minéral susceptible d'être employé comme charge.

On peut tout d'abord citer les oxydes ou hydroxydes minéraux utilisables comme charge et en particulier les oxydes de titane, d'aluminium, de zinc, d'antimoine, de zirconium, de cérium, de plomb, de magnésium et l'hydroxyde d'aluminium.

On peut aussi mentionner les sulfates parmi lesquels les sulfates de baryum, de calcium et de plomb.

Dans le cadre de l'invention, on peut aussi utiliser, toujours à titre de charge et de support, les sulfures et notamment le sulfure de zinc et le lithopone ainsi que les fluorures tels que, par exemple, le fluorure de calcium, le fluorure mixte de sodium et d'aluminium.

Le support peut aussi être avantageusement choisi dans le groupe des silicates.

En ce qui concerne les silicates, on peut citer notamment ceux du type kaolin ou mica, les silicates des métaux alcalino-terreux, notamment de calcium et de magnésium, les silicates de zinc, l'amiante, le talc, les alumino-silicates, en particulier de sodium.

Pour les carbonates, on peut mentionner les carbonates de calcium du type notamment calcite, vaterite ou aragonite ;les carbonates de magnésium du type magnésite et les carbonates mixtes de calcium et de magnésium du type dolomite, les carbonates de baryum et de plomb.

Comme cela a été indiqué plus haut, l'invention concerne aussi des pigments magnétiques pour lesquels la particule minérale est à base d'un élément choisi dans le groupe comprenant les métaux magnétiques, leur oxydes, et les complexes. A ce titre, on peut citer comme métaux, le fer, le chrome, le cobalt et le nickel. On pourra aussi utiliser les dioxydes de ces métaux ainsi que $Fe_3O_4$ et $Fe_2O_3$ gamma et les ferrites de formule $MFe_2O_4$ dans laquelle M représente un métal bivalent tel que le fer, le manganèse, le nickel ou le cobalt ou un mélange de métaux d'une autre valence. Enfin, on peut mentionner les composés de formule $R_3Fe_5O_{12}$ dans laquelle R représente une terre rare ou un autre ion trivalent tel que par exemple le lithium ou le scandium, le fer pouvant être partiellement remplacé par d'autres ions.

On notera que dans le cas des pigments magnétiques, le rapport en poids colorant/particule est de préférence au plus égal à 10 . Il s'agit là d'une caractéristique intéressante des pigments de l'invention en ce sens que, pour les pigments de l'art antérieur, la quantité de colorants était généralement nettement plus élevée, de l'ordre de 20 %.

Le second élément constitutif des pigments de l'invention est la silice formant couche ou silice périphérique.

Le troisième élément est le colorant.

Tout type de colorant peut être utilisé. Bien entendu, des colorants pourront être employés seuls ou en combinaison. Le choix se fera selon les critères connus de l'homme de l'art en fonction du résultat recherché. Une liste non limitative de ces colorants va être donnée ci-dessous.

Ils ont été regroupés par famille. Chaque paragraphe comporte, pour une famille donnée, le nom du colorant et son numéro dans le Color Index (CI).

## Colorants

| N° C. I. | CI nom générique |
|---|---|
| **Anthraquinone** | |
| 65 300 | Pigment Red 177 |
| - | Pigment Yellow 147 |
| 60 010 | Pigment Violet 31 |
| 60 505 | Solvent Red 111 |
| 61 110 | Solvent Blue 68 |
| 58 840 | Solvent Yellow 163 |
| - | Solvent Blue 132 |
| - | Solvent Blue 122 |
| - | Acid Blue 183 |
| - | Solvent Blue 225 |

| N° C. I. | Colorants |
|---|---|
| **Dioxazine** | |
| - | Pigment Violet 37 |
| **Flaranthrone** | |
| 70 600 | Pigment Yellow 24 |
| **Indanthrone** | |
| 69 800 | Pigment Blue 60 |
| **Quinacridone** | |
| 73 900 | Pigment Violet 19 |
| | Pigment Red 202 |
| | Pigment Red 207 |

Azo condensation

                                           Pigment Yellow 128

Pigment Yellow 93

Pigment Yellow 94

Pigment Yellow 95

Pigment Orange 31

Pigment Brown 23

Pigment Red 166

Pigment Red 220

Pigment Red 144

Pigment Red 248

Pigment Red 221

cuivre - phthalocyamine alpha

74 160                                       Pigment Blue 15

74 160                                       Pigment Blue 15:1

74 160                                       Pigment Blue 15:2

Cuivre phthalocyamine (beta)

74 160                                       Pigment Blue 15:3

74 160                                       Pigment Blue 15:4

Cuivre phthalocyamine halogénée

74 260                                       Pigment Green 7

74 265                                       Pigment Green 36

                                n° CI      CI nom générique

Isoindolinone

Orange 26                           –        Pigment Orange 61

                                     –        Pigment Yellow 109

                                56 280    Pigment Yellow 110

Azométhine

Complexe du cuivre                   –        Pigment Yellow 129

Complexe du nickel                   –        Pigment Orange 65

Perylene

                                71 217    Pigment Red 224

<u>Arylamide</u>

| | | |
|---|---|---|
| Arylamide 106 | 11 710 | Pigment Yellow 3 |
| Arylamide 6 | 11 680 | Pigment Yellow 1 |
| Arylamide | 11 741 | Pigment Yellow 74 |

<u>Diarylide</u>

| | | |
|---|---|---|
| Diarylide anilide | 21 090 | Pigment Yellow 12 |
| Diarylide m-xylidiole | 21 100 | Pigment Yellow 13 |
| Diarylide o-toluidiole | 21 095 | Pigment Yellow 14 |
| Diarylide p-toluidiole | 21 096 | Pigment Yellow 55 |
| Diarylide o-anisidiole | 21 105 | Pigment Yellow 17 |
| Diarylide dimethoxy chloranilide | 21 108 | Pigment Yellow |
| Diarylide pyrazolone | 21 110 | Pigment Orange 13 |
| Diarylide pyrazolone | 21 115 | Pigment Orange 34 |
| Diarylide pyrazolone | 21 120 | Pigment Red 38 |

<u>Colorants azo</u>

| | | |
|---|---|---|
| Azo (Ca) | 13 880 | Pigment Yellow 61 |
| | 13 940 | Pigment Yellow 62:1 |
| Azo (Ba) | | |
| | 15 602 | Pigment Red 46 |
| Azo 2 B (Ca) | 15 865:2 | Pigment Red 48:2 |
| Azo 2 B (Ba) | 15 865:1 | Pigment Red 48:1 |
| Azo 2 B toner (Sr) | 15 865:3 | Pigment Red 48:3 |
| Azo 2 B toner (Mg) | 15 865:5 | Pigment Red 48:5 |
| Azo 2 B toner (Mn) | 15 865:4 | Pigment Red 48:4 |
| Azo 4 B toner (Ca) | 15 850:1 | Pigment Red 57:1 |
| Azo (Mn) | 15 825:4 | Pigment Red 58:4 |
| Azo | 11 765 | Pigment Yellow 49 |
| | 12 470 | Pigment Orange 22 |
| | − | Pigment Red 222 |

<u>Dinitralinine orange</u>    12 075    Pigment Orange 5

<u>Naphtol</u>

| | | |
|---|---|---|
| Naphtol rouge | 12 085 | Pigment Red 4 |
| Naphtol AS | 12 310 | Pigment Red 2 |

| | | |
|---|---|---|
| Naphtol AS | 12 370 | Pigment Red 112 |
| Naphtol AS | 12 355 | Pigment Red 23 |
| Naphtol AS | 12 385 | Pigment Red 12 |
| Naphtol AS | 12 420 | Pigment Red 7 |
| Naphtol AS | 12 490 | Pigment Red 5 |
| Toluidine | | |
| Toluidine rouge | 12 120 | Pigment Red 3 |
| BON (Mn) | 15 880:2 | Pigment Red 63:2 |
| BON (Mn) | 15 860:2 | Pigment Red 52:2 |
| | | |
| Lake Red C (Ba) | 15 585:1 | Pigment Red 53:1 |
| Basic dye toner | 45 160:3 | Pigment Red 81:1 |
| | 45 160:2 | Pigment Red 169 |
| | 42 535:2 | Pigment Violet 3 |
| | 42 535:3 | Pigment Violet 27 |
| | 42 595:2 | Pigment Blue 1 |
| | – | Pigment blue 62 |
| | – | Pigment Green 45 |
| Complexe du fer (Na) | 10 006 | Pigment Green 8 |
| (sulfo) chromate de plomb | 77 600/ | |
| | 77 603 | Pigment Yellow 34 |
| Chromate de plomb | 77 600 | Pigment Yellow 34 |
| Mélange sulfo chromate de | 77 605 | Pigment Red 104 |
| plomb-molybdate | | |
| Monoazo sans métal | – | Solvant Yellow 146 |
| complexes du chrome | – | Acid Yellow 118 |
| " " " | – | Acid Orange 88 |
| " " " | – | Acid Brown 21 |
| " " " | – | Acid Red 211 |
| " " " | – | Acid Black 172 |

EP 0 266 247 B1

| Complexes du chrome | 18 690 | Solvent Yellow 21 |
|---|---|---|
| "      "      " | – | Solvent Red 213 |
| "      "      " | – | Solvent Red 7 |
| "      "      " | – | Solvent Red 214 |
| "      "      " | – | Solvent Yellow 88 |
| "      "      " | – | Solvent Orange 59 |
| "      "      " | – | Solvent Red 130 |
| Complexes du cobalt | – | Solvent Yellow 79 |
| "      "      " | – | Solvent Yellow 25 |
| "      "      " | – | Solvent Orange 11 |
| "      "      " | – | Solvent Red 125 |
| "      "      " | – | Solvent Violet 24 |

On peut aussi mentionner les complexes du nickel et les complexes aminés du cuivre, du nickel ou du cobalt.

Le procédé de préparation des pigments selon l'invention va maintenant être décrit plus précisément.

Ce procédé repose essentiellement sur la co-précipitation de la silice formant couche et d'un colorant ou d'un pigment de couleur. Le principe de préparation des pigments de l'invention consiste donc essentiellement à mettre en présence la particule ou le support minéral à traiter, un ou plusieurs colorants, le précurseur de la silice formant couche et de coprécipiter cette silice et le colorant.

Ce procédé peut être mis en oeuvre essentiellement selon deux variantes.

Dans le cas de la première variante, le procédé consiste à mettre en présence, à mélanger et à faire réagir le support, au moins un colorant, un silicate et un acide, ce par quoi on coprécipite de la silice et le colorant.

Selon un premier mode de réalisation de cette première variante, l'acide et le silicate sont ajoutés simultanément dans le milieu réactionnel. Plus précisément, on forme tout d'abord une suspension aqueuse du support. Ensuite, on ajoute simultanément l'acide et une solution aqueuse de silicate dans le milieu réactionnel.

Le colorant, quant à lui, peut être dans ce cas introduit de plusieurs manières.

Il peut être présent dans la suspension du support, préalablement à l'introduction de l'acide et du silicate. Il peut aussi être ajouté lors de la réaction et, dans ce dernier cas, il peut être amené, soit séparément, soit sous forme d'une solution dans le silicate.

Selon un mode de réalisation particulier, on peut introduire l'acide et le silicate en maintenant constant le pH du milieu réactionnel. Généralement, ce pH est fixé à une valeur comprise entre 8 et 9.

La température de réaction peut varier largement. En général, cette température est comprise entre 60 et 100° C.

Une fois la réaction terminée, il est possible d'abaisser le pH du milieu réactionnel par exemple jusqu'à une valeur d'environ 4. On peut aussi effectuer un mûrissement sur une durée variant entre 1/2 heure et 1 heure par exemple. L'abaissement du pH en fin de réaction permet de transformer le silicate restant en silice et d'obtenir ainsi une surface des particules qui ne soit pas trop basique.

Un deuxième mode de réalisation de cette première variante du procédé de l'invention consiste à former tout d'abord une suspension du support dans une solution aqueuse de silicate. Ensuite, on introduit le ou les colorants dans la suspension ainsi formée et on ajoute, simultanément ou postérieurement, l'acide.

Dans cette deuxième variante les conditions de température sont identiques à celles décrites dans la première. Il est bien entendu possible d'effectuer aussi un mûrissement.

En ce qui concerne le silicate, on utilise généralement un silicate alcalin et plus particulièrement les silicates de sodium, de potassium ou de lithium.

Pour les acides on utilise habituellement un acide choisi dans le groupe comprenant les acides sulfurique, nitrique, chlorhydrique, carbonique. L'acide est généralement employé sous la forme d'une solution aqueuse.

9

La séparation du pigment formé et de la phase liquide du milieu réactionnel obtenu selon les procédés décrits se fait ensuite d'une manière connue en soi. Le pigment séparé est ensuite séché.

La deuxième variante va maintenant être décrite.

Cette variante consiste essentiellement à préparer la silice par hydrolyse d'un alkyl-silicate.

Plus précisément, on met en présence le support, au moins un colorant et un alkyl-silicate, on hydrolyse cet alkyl-silicate et on sépare le pigment formé et la phase liquide du milieu réactionnel.

Il s'agit là de la voie plus particulièrement décrite dans l'article de STÖBER et al. JOURNAL OF COLLOID AND INTERFACE SCIENCE 26 62-69 (1968) dont l'enseignement est incorporé à la présente description.

Généralement, il est préférable d'effectuer l'hydrolyse en présence d'une base qui joue le rôle de catalyseur.

On procède en formant un milieu réactionnel par mélange d'eau, d'alcool, du support et, éventuellement d'une base, en introduisant ensuite l'alkyl-silicate, le ou les colorants étant, soit introduits simultanément, soit déjà présents dans le milieu réactionnel avant l'introduction de l'alkyl-silicate.

On peut utiliser comme base l'ammoniaque. Les alcools utilisés sont généralement des alcools aliphatiques. La réaction a habituellement lieu à température ambiante. L'alkyl-silicate est de préférence introduit avec un alcool.

Il est aussi possible de faire un pied de cuve à base d'alcool, de colorant, d'alkyl-silicate et d'y introduire ensuite l'eau ou un mélange eau-base.

Comme alkyl-silicate, on utilise en particulier le silicate d'éthyle.

Comme précédemment, le pigment obtenu est séparé du milieu réactionnel puis lavé en général à l'alcool, puis séché.

On peut aussi mentionner la possibilité d'effectuer un prétraitement du support minéral par formation sur celui-ci d'un complexe métallique à base par exemple de nickel, cuivre, cobalt, manganèse. Ce complexe peut être obtenu généralement par action d'un sel métallique, par exemple chlorure et d'une amine ou d'un dérivé d'amine en présence du support. A titre d'exemple, on peut citer les aminoalcools, les alkylamines. Le support qui a subi ce prétraitement est soumis ensuite au traitement selon l'invention tel que décrit plus haut.

De la même manière, le support peut être prétraité par formation sur celui-ci d'un oxyde métallique du type oxyde de chrome, nickel ou cobalt. Un tel prétraitement a pour but de masquer plus fortement le support, ce qui peut être intéressant dans le cas des supports très colorés du type oxydes de fer par exemple.

Ce prétraitement peut être fait par précipitation sur le support d'un sel métallique suivie éventuellement d'un traitement thermique.

Les pigments de l'invention peuvent avoir de nombreuses applications dans tous les domaines mettant en oeuvre des charges colorées. On pourra les utiliser par exemple dans la préparation de cosmétiques, de compositions détergentes, de colles.

Une application particulièrement intéressante pour les pigments magnétiques est leur utilisation dans la préparation des poudres de développement (toners).

Ces poudres comportent généralement des particules magnétiques, un ou plusieurs liants, des colorants et divers additifs tels que des agents de charges, des agents de couplage, des agents de conductivité, des lubrifiants ou savons métalliques, des agents de fluidité. Des exemples de liants convenables peuvent être le polystyrène, le chlorure de polyvinyle, les polyacrylates, les polyméthacrylates, les résines polyesters, les polyamides et les résines époxy, styrène-acryliques, styrène-butadiènes, les cires naturelles ou de synthèse. Généralement, la quantité de colorants est importante. Elle peut ainsi représenter de l'ordre de 20 % en Poids de la totalité de la poudre.

Ces poudres se préparent selon divers procédés tels que, par exemple, l'atomisation, l'encapsulation ou la voie sèche.

Le procédé de fabrication le plus utilisé opère par voie sèche. Ses différentes étapes sont les suivantes :

- mélange à sec des constituants,
- dispersion dans le milieu fondu des oxydes par extrusion-malaxage au moyen d'extrudeuses, de mélangeurs internes ou de malaxeurs à cylindres,
- refroidissement et concassage de produit,
- broyage grossier (broyeurs mécaniques),
- broyage fin (broyeurs à jet d'air),
- sélection des particules,
- traitement de surface éventuel,

- ajout d'additifs.

Les pigments de l'invention présentent plusieurs avantages dans la fabrication des poudres de développement.

Tout d'abord, le procédé de fabrication d'une poudre de développement de couleur est très simple, puisqu'il suffit de substituer le pigment classique par le pigment traité. On notera que l'utilisation des pigments de l'invention n'entraîne pas de modification en ce qui concerne le reste de la formulation des poudres, notamment pour les liants et additifs divers mentionnés plus haut.

On notera aussi qu'il est possible selon une variante particulière de l'invention de rajouter dans la composition des poudres de développement un colorant supplémentaire en plus de celui présent sur le pigment traité selon l'invention. Ce colorant qui constitue au plus 5 % en poids de la poudre de développement permet de moduler la couleur obtenue. On pourra utiliser dans ce but tout type de colorants convenables tels que décrits plus haut.

Il est aussi possible de mettre dans la composition des poudres de l'oxyde de titane, ce qui permet l'obtention de teintes plus lumineuses.

La teneur en particules magnétiques peut présenter de 10 à 90 % en poids de la poudre. Cette teneur dépend de l'usage auquel sera destinée la poudre.

Par ailleurs, les produits de l'invention permettent l'utilisation de pigments magnétiques usuels. Ils permettent aussi d'obtenir un éventail de couleurs plus étendu car le traitement effectué masque la couleur initiale du pigment magnétique.

On notera aussi que les couleurs obtenues sont plus pures, plus saturées que celles obtenues par simple mélange d'un colorant avec un pigment magnétique classique.

Enfin les poudres de développement à base des pigments de l'invention présentent un prix intéressant par rapport à celles de l'art antérieur, ce qui est dû à l'utilisation d'une quantité plus faible de colorant et à un traitement du pigment peu coûteux. Des exemples concrets mais non limitatifs de l'invention vont maintenant être donnés.

## EXEMPLE 1

Préparation d'oxyde de titane jaune par coprécipitation de $SiO_2$

Dans un réacteur en inox double enveloppe gainé polypropylène de 4,5 litres avec 3 contre-pâles, 1 agitateur 4 pales de diamètre 85 mm recouvert de silicone on introduit :

- 3000 cm$^3$ d'une bouillie de $TiO_2$ à 300 g/l broyé auparavant au sable d'OTTAWA en présence de 72 cm3 de silicate de sodium 8,4 à 100 g/l.

La suspension de $TiO_2$ est portée à 96° C à l'aide de la double enveloppe et d'une bougie chauffante de 500W. A cette température on introduit 9 g de colorant Irgalith jaune B3R de Ciba. L'agitation est maintenue à 850 tr min durant la réaction suivante.

On précipite de la silice par l'introduction à l'aide de pompes durant 2 heures à 4,5 cm3/min d'acide sulfurique à 1,57 % et de silicate de sodium de rapport molaire Rm $SiO_2$/$Na_2O$ 3,5 à 3,85 %.

Le pH passe de 10,3 à 9 en fin de réaction.

La suspension colorée est alors diluée dans son même volume. On effectue ensuite les opérations suivantes :

a) le décantat est repris avec 3 litres d'eau permutée,

b) reprise du décantat amené à pH 6,5 dans 1 000 cm$^3$ d'eau acidulée

c) reprise du décantat lavé une dernière fois avec 3 litres d'eau distillée.

On filtre, on sèche à 120° C le gâteau de 1 352 g donnant un produit sec de 720 g.

## EXEMPLE 2

Préparation d'un oxyde de fer $Fe_2O_3$ gamma vert par coprécipitation de $SiO_2$

Dans un réacteur en acier inoxydable de 5 litres, on introduit successivement :

- 3 000 cm$^3$ d'eau permutée,
- 500 g $Fe_2O_3$ gamma pulvérulent,
- 1000 cm3 de silicate de sodium Rm 3, 5 à 7 % en $SiO_2$.

Le mélange est porté à 75° C sous forte agitation le pH est de 10,2 à cette température.

On introduit alors 25 g d'un colorant le bleu G.E. de CIBA (valeur en extrait sec). Après homogénéisation de la suspension on introduit de l'acide sulfurique à 5 % à l'aide d'une pompe au débit de 30 cm$^3$ min pour amener le pH à 7 soit pendant un temps de 21 minutes. La température de 75° C est maintenue durant 30 minutes après l'introduction totale de l'acide sulfurique.

Le produit est ensuite filtré sur buchner et filtré sur papier et lavé par 2 fois son volume avec une eau acidifiée par $H_2SO_4$ et à pH 3,5.

Après séchage à 110° C durant 15 h on obtient 560 g d'une poudre magnétique de coloration verte.

EXEMPLE 3

Préparation d'un oxyde de fer $Fe_2O_3$ gamma vert par coprécipitation de $SiO_2$

Dans un réacteur en acier inoxydable de 5 litres, on introduit successivement.
- 3 000 cm³ d'eau permutée
- 500 g de $Fe_2O_3$ gamma pulvérulent.

Le mélange est porté à 75° C sous forte agitation le pH est de 8 à cette température. On introduit alors dans le pied de la cuve 25 g de colorant bleu G. E. de CIBA (valeur en sec).

Après dispersion dans la suspension, on additionne simultanément 1 000 cm3 de silicate de sodium Rm 3,5 à 7 % en $SiO_2$ au débit de 50 cm³/min et de l'acide sulfurique à 5 %. La régulation du pH se fait à 8,5 ce qui représente 620 cm3 d'acide sulfurique ajouté. Le pH est ensuite ramené à 7.

La température de 75° C est maintenue pendant 30 minutes après la fin de l'introduction d'$H_2SO_4$.

Le produit est ainsi filtré sur buchner et papier rapide. Il est lavé par deux fois son volume d'eau permutée acidifiée à pH 3,5 par $H_2SO_4$.

Après séchage en étuve à 110° C durant 15 h, on obtient 560 g d'une poudre magnétique de coloration verte.

EXEMPLE 4

Préparation d'un oxyde de fer $Fe_2O_3$ gamma rouge par coprécipitation de $SiO_2$

Dans un réacteur en inox de 4 litres, équipé d'un système de régulation de température et de pH, on introduit à température ambiante et dans l'ordre :
- 1 350 g d'eau déionisée,
- 850 cm³ de silicate de sodium à 780 g en $SiO_2$ et de rapport moléculaire $SiO_2/Na_2O = 3,4$
- 400 g d'oxyde de fer gamma (type 8 200 de Bayer).

Le mélange réactionnel ainsi obtenu est agité à 1 100 tr/min pour une agitation mécanique (turbine 4 pâles) jusqu'à homogénéisation (environ 1 heure).

On ajoute ensuite, sous agitation et progressivement 67 g de colorant (Irgalith 4 BP rouge de Ciba Geigy) (l'ajout dure environ 5 minutes).

Le mélange ainsi obtenu est chauffé à 70° C et dans la suite des essais, la température est régulée à 70° C ± 5° C et l'agitation est maintenue à 1 100 tr/min.

On procède par la suite à une addition progressive (pompe péristatique Watson-Marlow type 501) et avec un débit constant égal à 1,24 ml/min, 56 ml d'une solution aqueuse d'acide sulfurique de titre massique égal à 9 % (l'addition dure 45 min). Pendant l'addition de l'acide le pH du mélange diminue de 11,3 à 7,5.

Le mélange est laissé murir pendant 30 min à pH = 7,5, à 75° C et sous agitation.

Après refroidissement, le produit est filtré sur buchner et filtre Wahtmann No4 puis lavé à l'eau désionisée jusqu'à obtenir une eau de lavage de conductivité égale à celle de l'eau désionisée.

Le solide récupéré est séché à l'étuve à 130° C pendant 12 heures.

Le solide obtenu est un oxyde de fer gamma rouge, recouvert de silice. Le colorant est inclus dans la masse de silice déposée et n'est pas absorbé par lavage à l'eau où à l'acétone.

Analyse chimique du solide obtenu :

$SiO_2$ : 40 % en masse

Colorant : 8 % en masse

EXEMPLE 5

Préparation d'un oxyde de fer $Fe_2O_3$ gamma rouge par coprécipitation de $SiO_2$

On procède de la même façon que pour l'exemple 4 mais en utilisant 67 g de colorant rouge (Bayplast de Bayer) dissous dans 100 ml de propanol. Le produit obtenu est identique à celui de l'exemple 4.

EXEMPLE 6

Préparation d'un pigment d'oxyde de cérium par coprécipitation de $SiO_2$

12

Dans un réacteur de 1 litre en inox, on introduit 650 cm$^3$ d'H$_2$O permutée et 130 g de CeO$_2$.

Le mélange, sous agitation par turbine 4 pales à 800 tr.min, est porté à 95° C.

A cette température, on introduit simultanément 1,5 g de Bleu GE, du silicate de sodium Rm 3,4 à 7 % en SiO$_2$ et de l'H$_2$SO$_4$ 5 % au débit de 1,5 cm$^3$.min (silicate) en maintenant par régulation le pH à 8,5.

Après 1 heure, le pH du milieu est ramené à 7 par H$_2$SO$_4$ 5%. Le mélange est filtré à chaud sur filtré papier rapide et buchner. Le lavage est effectué à l'eau permutée.

Le produit est placé en étuve à 130° C durant 15 heures. Il est ensuite broyé.

EXEMPLE 7

Préparation d'un pigment bleu de TiO$_2$ par hydrolyse d'un silicate d'éthyle

Dans un réacteur en inox de 250 cm$^3$, sous forte agitation (900 tr.min par turbine 4 pales), on introduit :

|  |  |  |
|---|---|---|
| – Alcool éthylique | 165 | g |
| – NH$_4$OH (244 g/l en NH$_3$) | 9,3 | g |
| – H$_2$O permutée | 4,85 | g |
| – TiO$_2$ rutile | 12 | g |
| – un colorant bleu GE | 0,24 | g |

On introduit ensuite un mélange de silicate d'éthyle et d'éthanol, soit 68 g à 14,7 % en SiO$_2$, au débit de 1,8 cm$^3$ min. L'introduction dure 75 minutes à température ambiante. La filtration est effectuée sur un papier rapide et buchner.

Le lavage se fait d'abord à l'éthanol, puis à l'eau permutée. Le gâteau est séché à 120° C durant 15 heures en étuve ventilée. Le produit est ensuite broyé.

EXEMPLE 8

Préparation d'un pigment de carbonate de calcium par coprécipitation de SiO$_2$

On prépare une suspension de carbonate de calcium au moyen d'un disperseur Ultra Turax durant 5 minutes à vitesse moyenne.

On introduit
- 120 cm$^3$ d'H$_2$O permutée,
- 20 cm$^3$ de silicate de sodium Rm 3,4 à 7 % en SiO$_2$,
- 16 g de carbonate de calcium poudre.

Le mélange agité en réacteur inox de 250 cm$^3$ est additionné de 0,7 g de Vert GE unisperse de Ciba Geigy et porté à 75° C, pH = 9,9. On ajoute progressivement H$_2$SO$_4$ 5 % à 1,3 cm$^3$/min durant 9 minutes 20 secondes jusqu'à pH 6.

Le mélange à 75° C est laissé agité pendant 30 minutes pour assurer la stabilisation. On a alors un pH de 7,4. On lave à l'eau permutée le gâteau. Le produit est séché en étuve à 110° C durant 15 heures. Après broyage, on obtient une poudre verte.

EXEMPLE 9

Préparation d'un pigment de talc par coprécipitation de SiO$_2$

On prépare une suspension de talc au moyen d'un disperseur Ultra Turax à vitesse moyenne.

Dans un réacteur inox de 250 cm$^3$, on introduit successivement :
- 120 cm$^3$ d'eau permutée,
- 20 cm$^3$ de silicate Na Rm 3,4 à 7 % SiO$_2$,
- 16 g de talc.

Le mélange est agité à 1 100 tr/min en réacteur inox par une turbine 4 pales et porté à 75° C. On ajoute alors 0,6 g de Vert GE unisperse de Ciba-Geigy. Le pH passe à 10,2. Progressivement, on forme la silice par addition d'H$_2$SO$_4$ 5 % en 15 minutes jusqu'à pH 6. On laisse le mélange se stabiliser à 75° C durant 30 minutes, pH final = 7,4.

La filtration s'effectue sur buchner et papier rapide.

Le lavage se fait à l'eau permutée, puis à l'eau acidulée (H$_2$SO$_4$ - pH 3,5).

Le produit est séché à 110° C en étuve durant 15 heures. Broyé, il présente une belle coloration verte.

EXEMPLE 10

Préparation d'un pigment de kaolinite par coprécipitation de SiO₂

On prépare une suspension de kaolinite au moyen d'un disperseur Ultra Turax à vitesse moyenne.

On introduit :
- 240 cm³ d'H₂O permutée,
- 40 cm³ de silicate Na Rm 3,4 à 7 % SiO₂,
- 32 g de kaolinite (Translink).

Dans un réacteur inox de 500 cm³ , le mélange est additionné de 0,6 g de Vert GE unisperse de Ciba Geigy. Le mélange sous agitation turbine 4 pales est porté à 75° C donnant pH = 9,8.

Par ajout progressif de H₂SO₄ 5 % à 2,7 cm³/min, on effectue la neutralisation et la formation de SiO₂ durant 13 minutes ; on atteint pH 6,5. On stabilise le mélange 30 minutes à 75° C.

On filtre sur papier rapide. Le lavage se fait à l'eau permutée.

On sèche en étuve à 110° C durant 15 heures. Le produit broyé est vert clair.

EXEMPLE 11

Préparation d'un pigment d'Al₂O₃ par coprécipitation de SiO₂ Dans un bécher de 400 cm³, on introduit successivement :
- 120 cm³ d'H₂O permutée,
- 20 cm³ de silicate de sodium Rm 3,4 à 7 % en SiO₂,
- 24 g d'Al₂O₃ trihydratée.

Ce mélange est agité durant 5 minutes au moyen d'un Ultra Turax.

Le mélange homogène est transvasé dans un réacteur de 250 cm³ en inox avec agitation type turbine 4 pales de diamètre 30 mm. Sous

agitation 1 100 tr/min, on introduit le colorant Vert GE unisperse de Ciba Geigy, soit 0,6 g. Le mélange porté à 75° C (pH = 10,2) est additionné d'H₂SO₄ 5% au débit de 1,35 cm³/min durant 12 minutes 15 secondes. Le pH est de 6. On effectue une stabilisation de 30 minutes à 75° C.

Le produit est filtré à chaud sur buchner et papier rapide.

Les lavages s'effectuent avec une eau acidulée (H₂SO₄ - pH 3,5).

Le produit filtré est séché en étuve a 110° C durant 15 heures, puis broyé. Il présente alors une belle coloration verte.

EXEMPLE 12

Cet exemple a pour but de montrer la tenue à la coloration aux solvants des pigments colorés selon l'invention.

On utilise un tube de 50 cm³ bouché hermétiquement dans lequel on a placé 1 g de pigment à tester et 20 g de solvant qui peut être l'eau H₂O, le méthanol (MeOH), l'heptane (C₇).

On homogénéise le milieu par passage du tube dans un agitateur TURBULA pendant 2 heures.

On observe ensuite la sédimentation après 1 heure.

Les résultats sont donnés dans le tableau 1 ci-dessous. Pour les pigments, on fait référence à ceux qui ont été décrits dans les exemples ci-dessus.

On peut voir à la lecture du tableau que dans tous les cas, les colorants des pigments de l'invention ne sont pas éliminés par lavage à l'eau, au méthanol et à l'heptane.

TABLEAU 1

| Pigment | Solvant | $H_2O$ | MeOH | $C_7$ |
|---|---|---|---|---|
| Exemple 8 | | Incolore | Incolore | Incolore |
| Exemple 10 | | " | " | " |

## EXEMPLE 13 COMPARATIF

On prépare deux pigments selon un procédé de l'art antérieur, c'est-à-dire par simple mélange physique des constituants.

Le pigment A est obtenu en mélangeant en poids 80 % de $Fe_2O_3$ gamma, 10 % de silice et 10 % d'un colorant Bleu GE.

Le pigment B est obtenu en mélangeant en poids 55 % de $Fe_2O_3$ gamma, 20 % de $TiO_2$ et 25 % d'un colorant Bleu GE.

On effectue ensuite le test décrit dans l'exemple 12. Dans tous les cas, quel que soit le temps de sédimentation et même après centrifugation, on observe dans chaque solvant une forte coloration.

## EXEMPLE 14

cet exemple concerne la fabrication de poudres de développement magnétiques à partir de pigments selon l'invention.

Le pigment de base utilisé est l'oxyde magnétique traité ayant une couleur rouge de l'exemple 4.

Différents exemples de poudres sont préparés en faisant varier les proportions selon la formule générale :

| | | |
|---|---|---|
| Oxyde magnétique traité | : | 45 % |
| Résine acrylique | : | de 55 à 40 % |
| Colorant additionnel | : de | 0 à 5 % |
| Oxyde de titane | : de | 0 à 10 % |

Le mode opératoire général est le suivant :

Les différentes matières premières sont mélangées à sec.

Le mélange est ensuite extrudé à chaud puis refroidi et concasse.

Le produit est ensuite broyé finement avec un broyeur à jet d'air puis sélecté afin de conserver une poudre de diamètre moyen de 20 $\mu$ environ.

Des images sont réalisées sur une machine à photocopier avec réalisation d'à-plats dont on mesure les points de couleur au moyen d'un colorimètre par réflexion type ELREPHO.

Les résultats sont donnés dans le Tableau 2 ci-après.

**TABLEAU 2**

| POUDRE N° | COMPOSITION | ASPECT | POINT DE COULEUR |
|---|---|---|---|
| 1 | 45 % d'oxyde magnétique<br>0 % de colorant<br>0 % d'oxyde de titane<br>55 % de résine | Rouge<br>brique | $X_D = 0,51$<br>$Y_D = 0,30$<br>$Z_D = 0,19$ |
| 2 | 45 % d'oxyde magnétique<br>0 % de colorant<br>10 % d'oxyde de titane<br>45 % de résine | Rouge<br>brique<br>brillant | $X_D = 0,505$<br>$Y_D = 0,300$<br>$Z_D = 0,195$ |
| 3 | 45 % d'oxyde magnétique<br>5 % de colorant rouge<br>Irgalithe<br>10 % d'oxyde de titane<br>40 % de résine | Rouge<br>carmin<br>brillant | $X_D = 0,49$<br>$Y_D = 0,30$<br>$Z_D = 0,21$ |
| 4 | 45 % d'oxyde magnétique<br>2,5 % de colorant rouge<br>Bayplast<br>10 % d'oxyde de titane<br>42,5 % de résine | Rouge<br>vermillon<br>brillant | $X_D = 0,495$<br>$Y_D = 0,305$<br>$Z_D = 0,2$ |

On remarquera que la quantité de colorant additionnel utilisé est très faible et permet de moduler la couleur obtenue grâce à l'effet masquant du traitement de surface du pigment magnétique de départ.

D'autre part, l'ajout d'oxyde de titane permet d'obtenir des teintes plus lumineuses, obtention possible également grâce au traitement de surface du pigment magnétique.

EXEMPLE COMPARATIF 15

On prépare de la même manière que précédemment une poudre de composition suivante (poudre n° 5) :

- oxyde magnétique gamma $Fe_2O_3$ (Bayer AC 8200)    =    30 %
- colorant rouge (Irgalithe Ciba)    =    20 %
- oxyde de titane RL 11 A (Thann et Mulhouse)    =    20 %
- résine acrylique (Neocryl A Polyvinyl Chemie)    =    30 %

L'aspect est rouge vineux sombre et le point de couleur est le suivant :

$X_D$ = 0,43
$Y_D$ = 0,318
$Z_D$ = 0,252

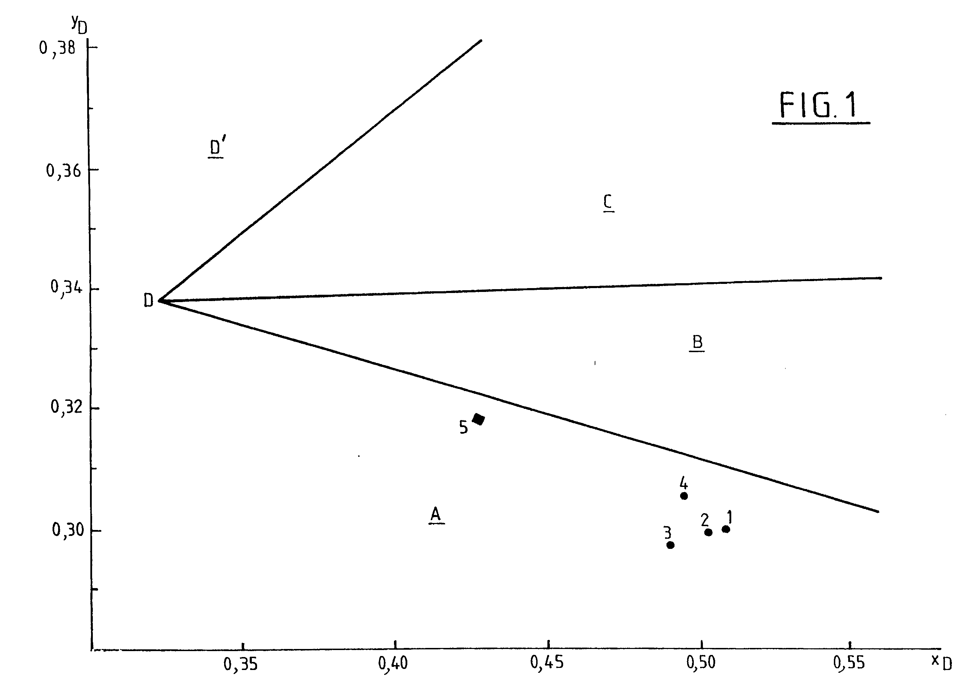

Les points de couleur des différents toners rouges sont visualisés sur la figure 1 qui permet de se rendre compte de l'avantage du procédé de préparation à base de pigments magnétiques traités en surface selon l'invention. Les zones A, B, C et D' correspondent respectivement aux teintes carmin, rouge, vermillon, orange.

EXEMPLE 16

Le pigment magnétique traité utilise est le produit de l'exemple 2.

Le mode opératoire est identique à l'exemple 14. Les produits et les résultats sont donnés dans le tableau 3 ci-après.

## T A B L E A U 3

| POUDRE N° | COMPOSITION | ASPECT | POINT DE COULEUR |
|---|---|---|---|
| 6 | :45% d'oxyde magnétique<br>:0% de colorant additionnel<br>:0% d'oxyde de titane<br>:55% de résine | Vert foncé brillant | $X_D$ = 0,31<br>$Y_D$ = 0,37<br>$Z_D$ = 0,32 |
| 7 | :45% d'oxyde magnétique<br>: 5 % de colorant vert Bayer H 206<br>:50 % de résine | Vert brillant | $X_D$ = 0,30<br>$Y_D$ = 0,42<br>$Z_D$ = 0,28 |
| 8 | :45% d'oxyde magnétique<br>: 5% de colorant vert Bayer<br>:10 % d'oxyde de titane<br>: 40 % de résine | Vert clair brillant plus saturé | $X_D$ = 0,29<br>$Y_D$ = 0,38<br>$Z_D$ = 0,33 |

EXEMPLE COMPARATIF 17

On prépare comme précédemment une poudre de composition suivante (poudre n° 9):

- oxyde magnétique gamma $Fe_2O_3$ Bayer 8200   =   40 %
- colorant vert Bayer H 206   =   10 %
- résine acrylique   50 %

L'aspect est verdâtre terne et le point de couleur est le suivant :

$X_D$   = 0,33
$Y_D$   = 0,36
$Z_D$   = 0,31

Les points de couleur des différents toners verts sont visualisés sur la figure n ° 2 dans laquelle les zones E, F, G et H correspondent respectivement aux teintes jaune, mousse, glauque et vert.

EXEMPLE 18

Cet exemple décrit un prétraitement du support minéral.

Dans un réacteur en acier équipé d'un système d'agitation de type ULTRA TURAX, on introduit successivement :

- 400 g d'eau
- 50 g d'oxyde de fer magnétique ($Fe_2O_3$ - gamma)

Le pH du mélange est ajusté à la valeur 9 par ajout de soude, puis l'oxyde de fer est dispersé par agitation mécanique pendant 30 min sous 2 000 tr/min.

On ajoute par la suite :

- 4,75 g de $NiCl_2$, 6 $H_2O$
- 15 g de triéthanolamine

Le mélange obtenu est agité pendant 30 min sous 1 000 tr/min.

Le mélange est ensuite filtré sur Buchner et lavé à l'eau.

Le produit récupéré est séché pendant 24 heures à 120° C.

**Revendications**

**1.** Pigment coloré, caractérisé en ce qu'il comprend :
- un support minéral,
- une couche de silice déposée à la surface dudit support et enrobant ledit support,
- au moins un colorant, ledit colorant étant inclus dans ladite couche de silice, et le pourcentage en poids dudit colorant par rapport audit support étant au plus égal à 10 %.

**2.** Pigment selon la revendication 1 , caractérisé en ce que le support minéral est à base d'un élément choisi dans le groupe comprenant les oxydes ou hydroxydes minéraux utilisables comme charge, les silicates, les carbonates minéraux, les sulfates, les sulfures et les fluorures.

**3.** Pigment selon la revendications 2, caractérisé en ce que les oxydes ou hydroxydes minéraux sont choisis dans le groupe comprenant les oxydes de titane, d'aluminium, de zinc, d'antimoine, de zirconium, de cérium, de plomb, de magnésium et l'hydroxyde d'aluminium.

**4.** Pigment selon l'une des revendications 1 ou 2, caractérisé en ce que le support minéral est à base d'un élément choisi dans le groupe comprenant les silicates de type kaolin ou mica, les silicates d'alcalino-terreux, de zinc, l'amiante, le talc, les silico-aluminates.

**5.** Pigment selon l'une des revendications 1 ou 2, caractérisé en ce que le support est à base d'un élément choisi dans le groupe des carbonates de calcium et/ou de magnésium, de baryum et de plomb.

6. Pigment selon la revendication 2, caractérisé en ce que les sulfates sont choisis dans le groupe comprenant les sulfates de baryum, de calcium et de plomb.

7. Pigment selon la revendication 2, caractérisé en ce que les sulfures sont choisis dans le groupe comprenant le sulfure de zinc et le lithopone.

8. Pigment selon la revendication 2, caractérisé en ce que les fluorures sont choisis dans le groupe comprenant le fluorure de calcium, le fluorure mixte de sodium et d'aluminium.

9. Pigment magnétique selon la revendication 1 , caractérisé en ce que le support minéral est à base d'un élément choisi dans le groupe comprenant les métaux magnétiques, leurs oxydes et les complexes.

10. Pigment selon la revendication 9, caractérisé en ce que le métal magnétique est le fer, le chrome, le cobalt, le nickel.

11. Pigment selon l'une des revendications 9 ou 10, caractérisé en ce que l'oxyde est une ferrite ou $Fe_2O_3$ gamma.

12. Procédé de préparation d'un pigment selon l'une quelconque des revendications précédentes caractérisé en ce qu'il comporte les étapes suivantes:
   - on met en présence le support, au moins un colorant et un précurseur de la silice du type silicate ou alkyl-silicate,
   - on précipite ou cristallise la silice par ajout d'un acide ou par hydrolyse,
   - on sépare le pigment formé et la phase liquide du milieu réactionnel.

13. Procédé selon la revendication 12, caractérisé en ce qu'on forme tout d'abord une suspension aqueuse du support et en ce qu'on introduit ensuite simultanément l'acide d'une part, le silicate d'autre part, le colorant étant, soit présent dans la suspension aqueuse précitée, soit amené en cours de réaction, séparément ou sous forme d'une solution dans le silicate.

14. Procédé selon la revendication 13, caractérisé en ce qu'on introduit l'acide et le silicate en maintenant constant le pH du milieu réactionnel.

15. Procédé selon l'une des revendications 12 à 14, caractérisé en ce qu'on forme tout d'abord une suspension du support dans une solution de silicate, et on introduit ensuite le colorant d'une part et l'acide d'autre part.

16. Procédé selon l'une des revendications 12 à 15, caractérisé en ce qu'on utilise un silicate alcalin.

17. Procédé selon l'une des revendications 12 à 16, caractérisé en ce qu'on utilise un acide choisi dans le groupe comprenant les acides sulfurique, nitrique, chlorhydrique, carbonique.

18. Procédé selon l'une des revendications 12 à 17, caractérisé en ce qu'après la fin de la réaction, on fait mûrir le pigment formé.

19. Procédé selon la revendications 12, caractérisé en ce que l'hydrolyse a lieu en présence d'une base.

20. Procédé selon la revendication 12, caractérisé en ce qu'on forme un milieu réactionnel par mélange d'eau, d'alcool et, le cas échéant, d'une base et en ce qu'on y introduit ensuite l'alkyl-silicate , le colorant étant soit introduit simultanément, soit présent dans le milieu réactionnel avant l'introduction de l'alkyl-silicate.

21. Procédé selon l'une quelconque des revendications 12 à 20, caractérisé en ce qu'après séparation du milieu réactionnel, le pigment est lavé et séché.

22. Procédé selon l'une quelconque des revendications 12 à 21, caractérisé en ce qu'on fait subir au support minéral un prétraitement en formant sur le support un complexe métallique.

**23.** Procédé selon la revendication 22, caractérisé en ce qu'on forme un complexe du nickel, du cuivre, du cobalt ou du manganèse.

**24.** Procédé selon la revendication 22 ou 23, caractérisé en ce qu'on forme les complexes par action d'un sel métallique avec une amine ou un dérivé d'une amine.

**25.** Procédé selon l'une quelconque des revendications 12 à 21, caractérisé en ce qu'on fait subir au support minéral un prétraitement en formant sur le support un oxyde métallique du type notamment oxyde de chrome, de nickel ou de cobalt.

**26.** Pigment, caractérisé en ce qu'il est obtenu par le procédé selon l'une quelconque des revendications 12 à 25.

**27.** Poudre de développement, caractérisé en ce qu'elle comprend un pigment notamment du type selon les revendications 9 à 11 ou un pigment préparé par le procédé selon les revendications 12 à 25.

**28.** Poudre selon la revendication 27, caractérisée en ce qu'elle comprend en outre de l'oxyde de titane.

**29.** Poudre selon la revendication 27 ou 28, caractérisée en ce qu'elle comprend un colorant supplémentaire outre celui absorbé sur le support ou sur l'oxyde et ou inclus dans l'oxyde.

## Claims

**1.** Coloured pigment, characterized in that it comprises a mineral support, a silica layer deposited on the surface of said support and enveloping the latter, at least one dye, said dye being included in said silica layer, and the weight percentage of said dye with respect to the support being at the most equal to 10%.

**2.** Pigment according to claim 1, characterized in that the mineral support is based on an element chosen from the group including mineral oxides or hydroxides usable as a charge, silicates, mineral carbonates, sulphates, sulphides and fluorides.

**3.** Pigment according to claim 2, characterized in that the mineral oxides or hydroxides are chosen from the group including titanium, aluminium, zinc, antimony, zirconium, cerium, lead and magnesium oxides and aluminium hydroxide.

**4.** Pigment according to one of the claims 1 or 2, characterized in that the mineral support is based on an element chosen from the group including silicates of the kaolin or mica type, alkaline earth silicates, zinc, asbestos, talc and silico aluminates.

**5.** Pigment according to one of the claims 1 or 2, characterized in that the mineral support is based on an element chosen from the group of carbonates of calcium and/or magnesium, barium and lead.

**6.** Pigment according to claim 2, characterized in that the sulphates are chosen from the group including barium, calcium and lead sulphates.

**7.** Pigment according to claim 2, characterized in that the sulphides are chosen from the group including zinc sulphide and lithopone.

**8.** Pigment according to claim 2, characterized in that the fluorides are chosen from the group including calcium fluoride and the mixed sodium and aluminium fluoride.

**9.** Magnetic pigment according to claim 1, characterized in that the mineral support is based on an element chosen from the group including magnetic metals, their oxides and complexes.

**10.** Pigment according to claim 9, characterized in that the magnetic metal is iron, chromium, cobalt or nickel.

EP 0 266 247 B1

**11.** Pigment according to one of the claims 9 or 10, characterized in that the oxide is a ferrite or gamma Fe$_2$O$_3$.

**12.** Process for the preparation of a pigment according to any one of the preceding claims, characterized in that it involves the following stages:
- at least one dye and a precursor of the silica of the silicate or alkyl-silicate type are brought together,
- the silica is precipitated or crystallized by adding an acid or by hydrolysis,
- the pigment formed and the liquid phase are separated from the reaction medium.

**13.** Process according to claim 12, characterized in that firstly formation takes place of an aqueous suspension of the support and that then there is the simultaneous introduction of the acid on the one hand and the silicate on the other, the dye either being present in the aforementioned aqueous suspension, or is supplied during the reaction, either separately or in the form of a solution in the silicate.

**14.** Process according to claim 13, characterized in that the acid and the silicate are introduced whilst keeping constant the pH of the reaction medium.

**15.** Process according to one of the claims 12 to 14, characterized in that formation firstly takes place of a suspension of the support in a silicate solution and then introduction takes place of the dye on the one hand and the acid on the other.

**16.** Process according to one of the claims 12 to 15, characterized in that an alkali metal silicate is used.

**17.** Process according to one of the claims 12 to 16, characterized in that use is made of an acid chosen from the group including sulphuric, nitric, hydrochloric and carbonic acids.

**18.** Process according to one of the claims 12 to 17, characterized in that the pigment formed is aged following the end of the reaction.

**19.** Process according to claim 12, characterized in that hydrolysis takes place in the presence of a base.

**20.** Process according to claim 12, characterized in that a reaction medium is formed by mixing water, alcohol and, if appropriate, a base and in that into it is then introduced the alkyl-silicate, the dye either being introduced simultaneously, or is present in the reaction medium prior to the introduction of the alkyl-silicate.

**21.** Process according to any one of the claims 12 to 20, characterized in that the pigment is washed and dried after separation from the reaction medium.

**22.** Process according to any one of the claims 12 to 21, characterized in that the mineral support undergoes a pretreatment by forming on the said support a metal complex.

**23.** Process according to claim 22, characterized in that formation takes place of a nickel, copper, cobalt or manganese complex.

**24.** Process according to claims 22 or 23, characterized in that the complexes are formed by the action of a metal salt with an amine or a derivative of an amine.

**25.** Process according to any one of the claims 12 to 21, characterized in that the mineral support undergoes a pretreatment by forming on the said support a metal oxide of in particular the chromium, nickel or cobalt oxide type.

**26.** Pigment, characterized in that it is obtained by the process according to any one of the claims 12 to 25.

**27.** Developing powder, characterized in that it comprises a pigment more particularly of the type

21

according to claims 9 to 11 or a pigment prepared by the process according to claims 12 to 25.

**28.** Powder according to claim 27, characterized in that it also comprises titanium dioxide.

**29.** Powder according to claims 27 or 28, characterized in that it comprises a supplementary dye, other than that absorbed on the support or on the oxide and/or included in the oxide.

**Ansprüche**

**1.** Farbpigment, dadurch gekennzeichnet, daß es
- einen mineralischen Träger,
- eine auf der Oberfläche des Trägers abgeschiedene und ihn umhüllende Siliciumdioxidschicht und
- wenigstens ein Farbmittel umfaßt, wobei das Farbmittel in die Siliciumdioxidschicht eingeschlossen ist und sein Gewichtsprozentgehalt, bezogen auf den Träger, höchstens 10 % beträgt.

**2.** Pigment nach Anspruch 1, dadurch gekennzeichnet, daß der anorganische Träger auf einem Bestandteil basiert, der aus der Gruppe ausgewählt ist, welche die als Füllstoff verwendbaren mineralischen Oxide oder Hydroxide, Silicate, mineralischen Carbonate, Sulfate, Sulfide und Fluoride umfaßt.

**3.** Pigment nach Anspruch 2, dadurch gekennzeichnet, daß die mineralischen Oxide oder Hydroxide aus der Gruppe ausgewählt sind, welche die Oxide des Titans, Aluminiums, Zinks, Antimons, Zirkoniums, Cers, Bleis, Magnesiums und Aluminiumhydroxid umfaßt.

**4.** Pigment nach Anspruch 1 oder 2, dadurch gekennzeichnet, daß der mineralische Träger auf einem Bestandteil basiert, der aus der Gruppe ausgewählt ist, welche die Silicate des Kaolin- oder Glimmer-Typs, die Erdalkali- und Zinksilicate, Asbest, Talkum und Silicoaluminate umfaßt.

**5.** Pigment nach Anspruch 1 oder 2, dadurch gekennzeichnet, daß der Träger auf einem Bestandteil basiert, der aus der Gruppe der Carbonate des Calciums und/oder Magnesiums, Bariums und Bleis ausgewählt ist.

**6.** Pigment nach Anspruch 2, dadurch gekennzeichnet, daß die Sulfate aus der Gruppe ausgewählt sind, welche die Sulfate des Bariums, Calciums und Bleis umfaßt.

**7.** Pigment nach Anspruch 2, dadurch gekennzeichnet, daß die Sulfide aus der Gruppe ausgewählt sind, welche Zinksulfid und Lithopone umfaßt.

**8.** Pigment nach Anspruch 2, dadurch gekennzeichnet, daß die Fluoride aus der Gruppe ausgewählt sind, welche Calciumfluorid und das gemischte Natriumaluminiumfluorid umfaßt.

**9.** Magnetisches Pigment nach Anspruch 1, dadurch gekennzeichnet, daß der anorganische Träger auf einem Bestandteil basiert, der aus der Gruppe ausgewählt ist, welche die magnetischen Metalle, ihre Oxide und Komplexe umfaßt.

**10.** Pigment nach Anspruch 9, dadurch gekennzeichnet, daß das magnetische Metall Eisen, Chrom, Cobalt und Nickel ist.

**11.** Pigment nach Anspruch 9 oder 10, dadurch gekennzeichnet, daß das Oxid ein Ferrit oder $\gamma$-$Fe_2O_3$ ist.

**12.** Verfahren zur Herstellung eines Pigments nach einem der vorhergehenden Ansprüche, dadurch gekennzeichnet, daß es die folgenden Stufen umfaßt:
- Zusammenbringen des Trägers, wenigstens eines Farbmittels und einer Siliciumdioxid-Vorstufe vom Silicat- oder Alkylsilicat-Typ,
- Ausfällen oder Kristallisieren des Siliciumdioxids durch Zugabe einer Säure oder Hydrolyse und
- Abtrennen des gebildeten Pigments von der Flüssigphase des Reaktionsmediums.

**13.** Verfahren nach Anspruch 12, dadurch gekennzeichnet, daß man zunächst eine wäßrige Trägersuspension bildet und anschließend gleichzeitig einerseits die Säure und andererseits das Silicat zugibt, wobei das Farbmittel entweder in der wäßrigen Suspension vorhanden ist oder im Reaktionsverlauf einzeln oder in Form einer Lösung im Silicat eingebracht wird.

14. Verfahren nach Anspruch 13, dadurch gekennzeichnet, daß man die Säure und das Silicat bei Konstanthalten des pH-Werts des Reaktionsmediums zugibt.

15. Verfahren nach einem der Ansprüche 12 bis 14, dadurch gekennzeichnet, daß man zunächst eine Suspension des Trägers in einer Silicat-Lösung herstellt und anschließend einerseits das Farbmittel und andererseits die Säure zugibt.

16. Verfahren nach einem der Ansprüche 12 bis 15, dadurch gekennzeichnet, daß man ein Alkalisilicat verwendet.

17. Verfahren nach einem der Ansprüche 12 bis 16, dadurch gekennzeichnet, daß man eine Säure verwendet, die aus der Gruppe ausgewählt ist, welche Schwefel-, Salpeter-, Chlorwasserstoff- und Kohlensäure umfaßt.

18. Verfahren nach einem der Ansprüche 12 bis 17, dadurch gekennzeichnet, daß man das gebildete Pigment nach Reaktionsende wachsen läßt.

19. Verfahren nach Anspruch 12, dadurch gekennzeichnet, daß die Hydrolyse in Gegenwart einer Base stattfindet.

20. Verfahren nach Anspruch 12, dadurch gekennzeichnet, daß man ein Reaktionsmedium durch Mischen von Wasser, Alkohol und gegebenenfalls einer Base herstellt und anschließend das Alkylsilicat zugibt, wobei das Farbmittel entweder gleichzeitig eingebracht oder im Reaktionsmedium vor der Alkylsilicat-Zugabe vorhanden ist.

21. Verfahren nach einem der Ansprüche 12 bis 20, dadurch gekennzeichnet, daß das Pigment nach der Abtrennung vom Reaktionsmedium gewaschen und getrocknet wird.

22. Verfahren nach einem der Ansprüche 12 bis 21, dadurch gekennzeichnet, daß man den mineralischen Träger einer Vorbehandlung zur Bildung eines Metallkomplexes auf dem Träger unterzieht.

23. Verfahren nach Anspruch 22, dadurch gekennzeichnet, daß man einen Nickel-, Kupfer-, Cobalt- oder Mangan-Komplex herstellt.

24. Verfahren nach Anspruch 22 oder 23, dadurch gekennzeichnet, daß man die Komplexe durch Umsetzung eines Metallsalzes mit einem Amin oder einem Aminderivat herstellt.

25. Verfahren nach einem der Ansprüche 12 bis 21, dadurch gekennzeichnet, daß man den mineralischen Träger einer Vorbehandlung zur Bildung eines Metalloxids, insbesondere des Chrom-, Nickel- oder Cobaltoxidtyps, auf dem Träger unterzieht.

26. Pigment, dadurch gekennzeichnet, daß es durch das Verfahren nach einem der Ansprüche 12 bis 25 erhalten wird.

27. Entwicklungspulver, dadurch gekennzeichnet, daß es ein Pigment, insbesondere des Typs der Ansprüche 9 bis 11 oder ein durch das Verfahren nach den Ansprüchen 12 bis 25 hergestelltes Pigment umfaßt.

28. Pulver nach Anspruch 27, dadurch gekennzeichnet, daß es außerdem Titanoxid umfaßt.

29. Pulver nach Anspruch 27 oder 28, dadurch gekennzeichnet, daß es außer dem auf dem Träger oder Oxid absorbierten und/oder im Oxid eingeschlossenen ein zusätzliches Farbmittel umfaßt.

FIG.1

EP 0 266 247 B1

FIG. 2

EP 0 266 247 B1